# EUROPEAN PATENT SPECIFICATION

(11) **EP 4 227 861 B1**
(45) Date of publication and mention of the grant of the patent: **31.12.2025**
(21) Application number: 22209161.3
(22) Date of filing: 23.11.2022
(51) Int. Cl.: G06N 5/02, G06N 5/045, G06N 3/042, G06N 3/08

(54) **ARTIFICIAL INTELLIGENCE SYSTEM FOR A JOINT GROUP PREDICTION BY INDIVIDUAL PREDICTION AND EXPLANATION-BASED RE-RANKING**
SYSTEM DER KÜNSTLICHEN INTELLIGENZ FÜR EINE GEMEINSAME GRUPPENVORHERSAGE DURCH INDIVIDUELLE VORHERSAGE UND ERKLÄRUNGSBASIERTE NEUORDNUNG
SYSTÈME D'INTELLIGENCE ARTIFICIELLE POUR UNE PRÉDICTION DE GROUPE D'ARTICULATION PAR PRÉDICTION INDIVIDUELLE ET RECLASSEMENT BASÉ SUR L'EXPLICATION

(30) Priority: 11.02.2022 US 202263309016 P; 22.04.2022 US 202217726565
(43) Date of publication of application: 16.08.2023
(73) Proprietor: NEC Corporation, Minato-ku Tokyo 108-8001 (JP)
(72) Inventor: Sztyler, Timo, 69115 Heidelberg (DE); Lawrence, Carolin, 69115 Heidelberg (DE)
(74) Representative: Ullrich & Naumann PartG mbB

(56) References cited:
- GRISWOLD KYLE ET AL: "Joint Link Prediction in Temporal Networks", 1 January 2015 (2015-01-01), pages 1 - 6, XP093049528, Retrieved from the Internet <URL:http://snap.stanford.edu/class/cs224w-2015/projects_2015/Joint_Link_Prediction_in_Temporal_Networks.pdf> [retrieved on 20230525]
- FU ZUOHUI ZUOHUI FU@RUTGERS EDU ET AL: "Fairness-Aware Explainable Recommendation over Knowledge Graphs", PROCEEDINGS OF THE 43RD INTERNATIONAL ACM SIGIR CONFERENCE ON RESEARCH AND DEVELOPMENT IN INFORMATION RETRIEVAL, ACMPUB27, NEW YORK, NY, USA, 25 July 2020 (2020-07-25), pages 69 - 78, XP058465139, ISBN: 978-1-4503-8016-4, DOI: 10.1145/3397271.3401051

## Description

### FIELD

The present invention relates to artificial intelligence (AI) and machine learning (ML) and in particular to a method, system and computer-readable medium for providing a joint prediction for a group of individual entities.

Griswold et al: "Joint Link Prediction in Temporal Networks", 1 January 2015, pages 1-6, retrieved from the Internet: http://snap.stanford.edu/class/cs224w-2015/projects_2015/ Joint_Link_Prediction_in_Temporal_Networks.pdf, provides an approach for the prediction of which links are likely to appear in a temporal network, such as a temporal network between different people. Instead of focusing on individual links in isolation, the paper proposes an approach where the interrelationship of different links being formed is considered as well.

Fu et al: "Fairness-Aware Explainable Recommendation over Knowledge Graphs", Proceedings of the 43rd International ACM SIGIR Conference on Research and Development in Information Retrieval, ACMPUB27, New York, USA, 25 July 2020, pages 69-78, DOI: 10.1145/3397271.3401051, ISBN: 978-1-4503-8016-4, proposes a fairness-constrained approach to providing recommendations which seeks to overcome biases that favor more active users at the detriment of inactive users.

### SUMMARY

The invention is set out in the independent claims. Preferred embodiments are set out in the dependent claims.

### BRIEF DESCRIPTION OF THE DRAWINGS

Subject matter of the present disclosure will be described in even greater detail below based on the exemplary figures. The advantages of various embodiments will become apparent by reading the following detailed description with reference to the attached drawings, which illustrate the following:
FIG. 1 illustrates a method and system architecture for providing a consolidated recommendation for a group of entities according to an embodiment of the present invention;
FIG. 2 illustrates, before the domain alignment component, an example for the historical graph database where entities belong to one of three subgroups (source, target or attribute);
FIG. 3 illustrates, after the domain alignment component, graph fusion data as an example for the knowledge graph after the graph fusion step, wherein two new source entities are now connected to the historic graph;
FIG. 4 illustrates, after the prediction engine, graph fusion and recommendation data, wherein the prediction engine produces recommendations for the new source entities of interest;
FIG. 5 illustrates, after the preference collector component, graph fusion, recommendation and preference data as an input graph for the consolidation engine component;

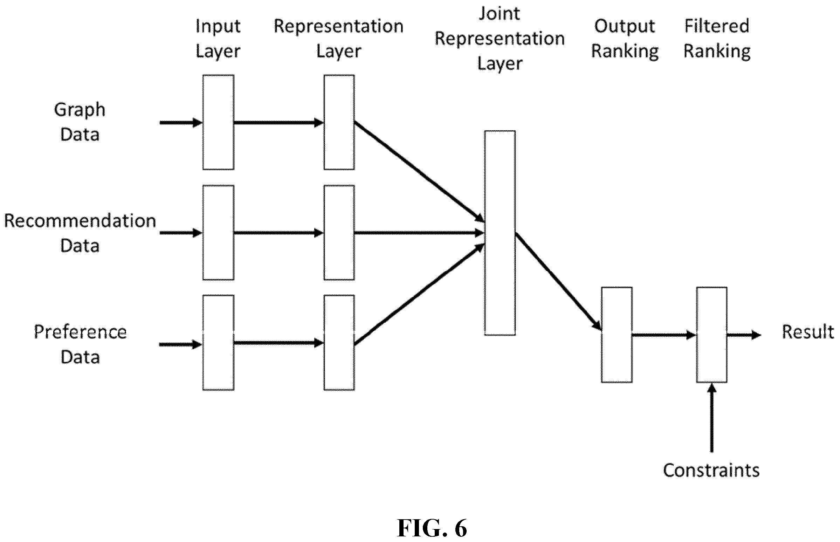

FIG. 6 illustrates a neural network architecture of the consolidation engine component; and
FIG. 7 is a block diagram of a processing system according to an embodiment.

### DETAILED DESCRIPTION

Often preferences of different individuals contradict each other, but common environments of individuals can require a joint decision. Embodiments of the present invention provide a mechanism where the predictions of a group of individual entities are consolidated into one joint prediction, which respects individual wishes as well as possible rankings of individuals within the group.

AI systems typically make predictions for one particular entity. However, often different entities are linked and the goal can be to arrive at one joint solution. For example, consider a group of people who would like to go together on vacation. Individually, the people might choose a different vacation destination than the one they would choose as a group. This should be respected when the AI system gives vacation recommendations to users. Embodiments of the present invention therefore have a technical aim and serve a specific technical purpose, in particular to improve the technical functionality and flexibility of non-human, computerized and automated or semi-automated AI systems. In particular, the accuracy of joint predictions, and the ability to make joint predictions generally, are improved.

Existing or naive solutions suffer from two major drawbacks: (1) if a group of entities (e.g., individuals) is represented as one entity, then it is not possible to respect the wishes of individual entities, nor is it possible to later leverage learned information if one entity becomes part of another group of entities; and (2) if a majority vote is taken across individual predictions, this does not respect the strength of individual wishes, nor the aspect that the prediction of one entity might have a stronger influence on the final prediction than the prediction of other entities.

In an embodiment, method is provided with which the predictions of a group of individuals can be consolidated to form one joint prediction. In an embodiment, the group is not modeled as a whole (as this would lead to a loss of information about the individuals of the group), which is advantageous and provides improvements over existing or naive solutions for several reasons: (1) the individual entities are able to later be a part of other groups; (2) the individual entities are able to have varying strengths of preferences with regards to certain prediction that can be taken into account; and (3) the prediction of some individual entities are able to weigh higher than that of others. Another advantageous improvement is that the links between group members can be explicitly encoded in order to learn the relations between the group members.

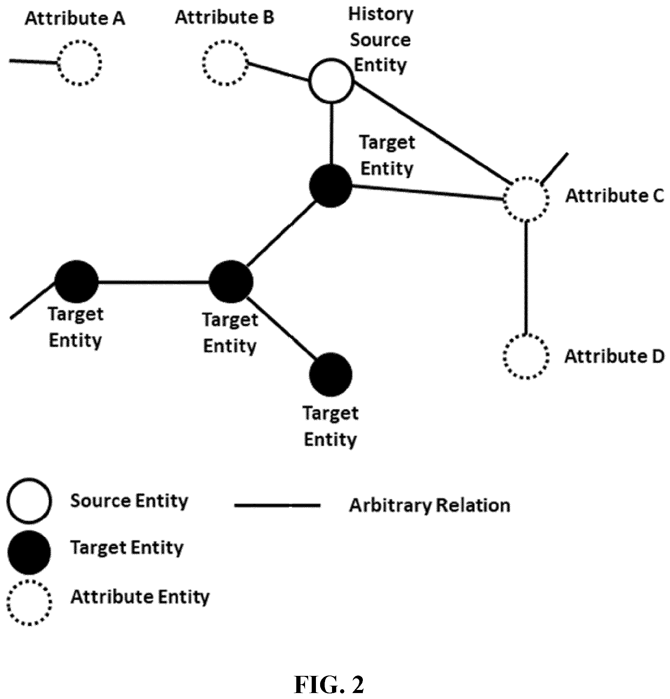

Embodiments use a knowledge graph which includes triples t = (h, r, t), where h and t are entities and r is a relation. Entities of the knowledge graph are grouped in the following subgroups: (1) source entity; (2) target entity; and (3) attribute entity (see FIG. 2). The goal is to produce a consolidated prediction for a group of source entities. For example, the source entities could be different people who want to go together on vacation. Each individual receives their own individual recommendation and these recommendations are then consolidated to provide a final recommendation for the entire group. In this scenario, people will be source entities, vacation destinations will be target entities and additional attributes (such as swimming pool, beach, gender or age of a source entity, etc.), which are associated with either source and target entities or both types of entities, will be attribute entities. Depending on the use case, these groups can overlap.

In a first aspect, the present disclosure provides a computer-implemented method of consolidating recommendations based on a plurality of individual recommendations. The method is implemented in one or more processors connected to a memory and includes receiving a knowledge graph including a plurality of source entities, a plurality of target entities and a plurality of attribute entities. Each source entity is linked to one or more of the plurality of attribute entities, and each target entity is linked to one or more of the plurality of attribute entities. Using a trained prediction learning model, a prediction is determined for each source entity based on the knowledge graph. The trained prediction model was trained using prediction training data including historical data. The prediction for each source includes recommendation data identifying one or multiple target entities. Using a trained consolidation learning model, a consolidated prediction is determined for the plurality of source entities based on the prediction for each source entity. The trained consolidation learning model was trained using consolidation training data including the historical data and the recommendation data. The consolidated prediction identifies a target entity that maximizes a joint probability of the plurality of source entities.

In a second aspect, the present disclosure provides the method according to the first aspect, wherein one or more of the plurality of source entities are linked to one or more other source entities and/or one or more target entities.

In a third aspect, the present disclosure provides the method according to the first or second aspect, wherein the determining, using a trained prediction learning model, a prediction for each source entity includes learning vector representations of the knowledge graph.

In a fourth aspect, the present disclosure provides the method according to any of the aspects above, wherein the consolidated prediction identifies multiple target entities in a ranked order.

In a fifth aspect, the present disclosure provides the method according to any of the aspects above, further comprising applying source entity constraints of one or more of the plurality of source entities to the ranked order to create a filtered ranked order of the identified multiple target entities.

In a sixth aspect, the present disclosure provides the method according to any of the aspects above, wherein the recommendation data for each prediction includes a prediction explanation, and the consolidated prediction includes a consolidated prediction explanation.

In a seventh aspect, the present disclosure provides the method according to any of the aspects above, wherein the prediction for each source entity includes a weight, and wherein the determining a consolidated prediction is further based on the weights of the predictions for each source entity.

In an eighth aspect, the present disclosure provides the method according to any of the aspects above, further comprising: fusing a new source entity into the knowledge graph by linking the new source entity to one or more of the plurality of attribute entities to produce a fused knowledge graph, updating the step of determining a prediction for each source entity and the new source entity using the fused knowledge graph, and updating the step of determining a consolidated prediction for the plurality of source entities and the new source entity.

In a ninth aspect, the present disclosure provides a system configured for consolidating recommendations based on a plurality of individual recommendations, the system comprising one or more processors, which alone or in combination, are configured to provide for execution of a method comprising: receiving a knowledge graph including a plurality of source entities, a plurality of target entities and a plurality of attribute entities, wherein each source entity is linked to one or more of the plurality of attribute entities, and each target entity is linked to one or more of the plurality of attribute entities; determining, using a trained prediction learning model, a prediction for each source entity based on the knowledge graph, the trained prediction model having been trained using prediction training data including historical data, wherein the prediction for each source includes recommendation data identifying one or multiple target entities; and determining, using a trained consolidation learning model, a consolidated prediction for the plurality of source entities based on the prediction for each source entity, the trained consolidation learning model having been trained using consolidation training data including the historical data and the recommendation data, wherein the consolidated prediction identifies a target entity that maximizes a joint probability of the plurality of source entities.

In a tenth aspect, the present disclosure provides the system according to the ninth aspect, wherein the method further includes: fusing a new source entity into the knowledge graph by linking the new source entity to one or more of the plurality of attribute entities to produce a fused knowledge graph, updating the step of determining a prediction for each source entity and the new source entity using the fused knowledge graph, and updating the step of determining a consolidated prediction for the plurality of source entities and the new source entity.

In an eleventh aspect, the present disclosure provides the system according to the ninth or tenth aspect, wherein one or more of the plurality of source entities are linked to one or more other source entities and/or one or more target entities.

In a twelfth aspect, the present disclosure provides the system according to any of the ninth through eleventh aspects, wherein the consolidated prediction identifies multiple target entities in a ranked order, and wherein the method further includes applying source entity constraints of one or more of the plurality of source entities to the ranked order to create a filtered ranked order of the identified multiple target entities.

In an thirteenth aspect, the present disclosure provides the system according to any of the ninth through twelfth aspects, wherein the recommendation data for each prediction includes a prediction explanation, and the consolidated prediction includes a consolidated prediction explanation.

In a fourteenth aspect, the present disclosure provides the system according to any of the ninth through thirteenth aspects, wherein the prediction for each source entity includes a weight, and wherein the determining a consolidated prediction is further based on the weights of the predictions for each source entity.

In a fifteenth aspect, the present invention provides a tangible, non-transitory computer-readable medium having instructions thereon which, upon being executed by one or more processors, alone or in combination, provide for execution of the method according to any of the first through eighth aspects.

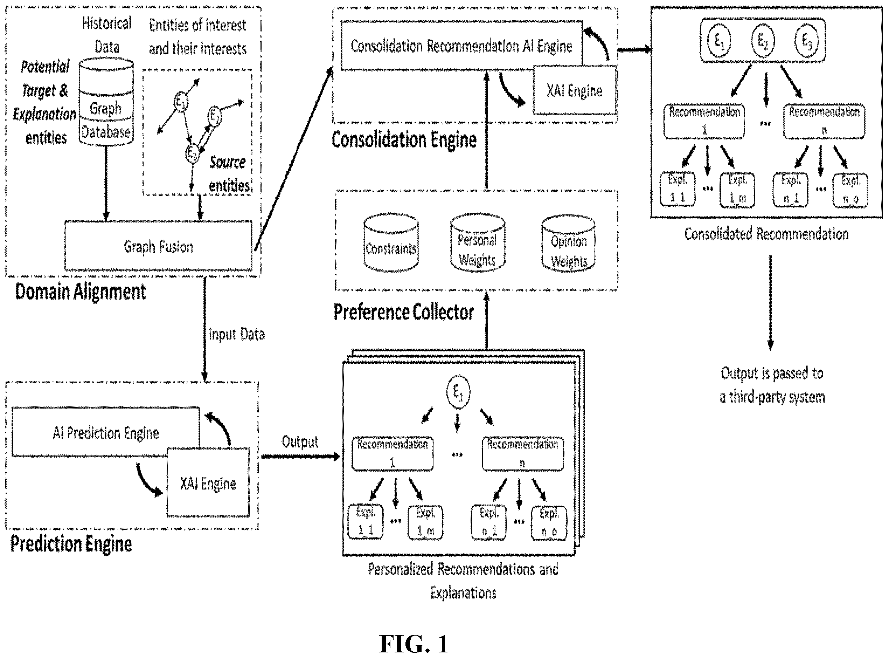

FIG. 1 illustrates a method and system architecture according to an embodiment comprising four components: (1) domain alignment; (2) prediction engine; (3) preference collector; and (4) consolidation engine. Input data is a knowledge graph that includes triples. The triples represent information, which may have been gathered by various sensors (e.g., microphones, cameras, acceleration sensors, etc.). Output is a series of recommendations and, preferably, explanations for the recommendations. The output is directed to provide recommendations and explanations to a computer-implemented system.

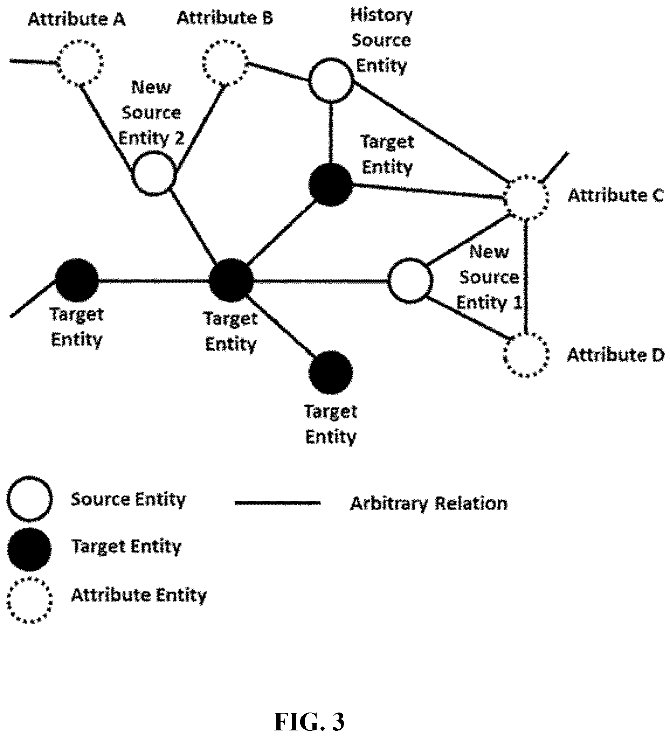

The domain alignment component (input: FIG. 2, output: FIG. 3) handles and preprocesses the input data for the system. In particular, this component includes a graph database to manage historical data (e.g., target and attribute entities, as well as historic source entities) and a graph fusion module to connect new entities or the entities of interest (source entities) with the database. This includes to establish links between the existing source and target entities and links with their attributes, such as preferences (e.g., "likes beach"), characteristics (e.g., "is x years old"), etc. which are stored in the database. The output of this component, also referred to herein as "graph fusion data", is a knowledge graph including source, target and attribute entities (see FIG. 3).

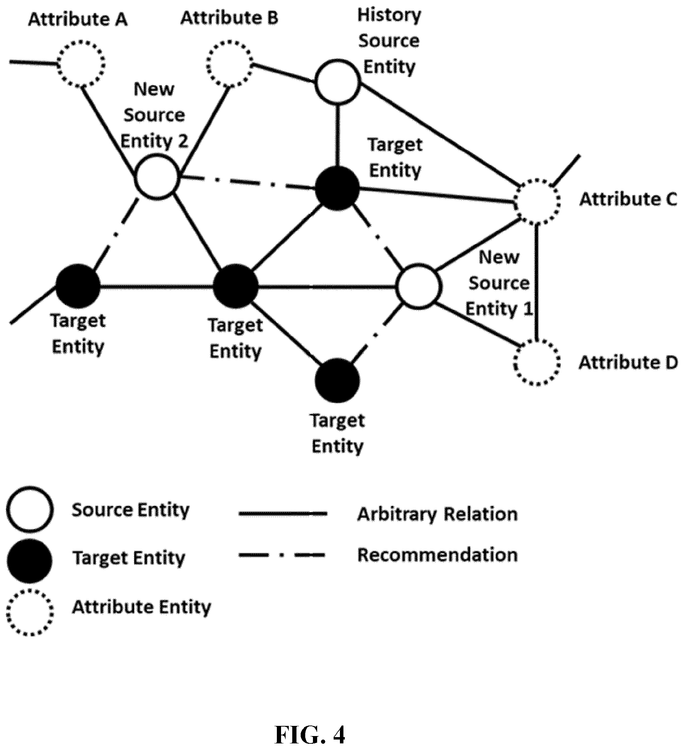

The prediction engine component (input: FIG. 3, output: FIG. 4) learns vector representations of the knowledge graph and then predicts for each source entity (e.g., individuals) of the group a recommendation or a (preferably ordered) list of recommendations. Additionally, for this prediction, an explanation is also provided. The explanation can be provided in various ways, for example: (1) an explainer selects a subset of the knowledge graph to explain the prediction; (2) all neighbors of the source entity are shown; and/or (3) the entire knowledge graph is shown. For example, a person is recommended a vacation destination because the person likes the beach and the vacation destination has a beach. The output of this component is a personal (ordered) list of target entities (e.g., recommendations), also referred to herein as "recommendation data", along with explanations for each target entity (e.g., in the form of attribute entities).

When a new source entity is added to the knowledge graph by the graph fusion module, the prediction is updated to learn a vector representation for this new source entity. Given a new source entity, the graph fusion module establishes links between the new source entity and existing entities in the graph in the form of triples. These triples are then used to update the prediction engine, such that only the vector of the new source entity is modified during the updates and the other vectors are left untouched. This is to ensure that the new source entity vector fits into the knowledge graph presentation and is only possible due to the definition of how source entities are added to the knowledge graph via the graph fusion module. The prediction engine component can be a knowledge base learner (KBlrn) and the explainer can be an explainable AI (XAI) engine that uses gradient rollback.

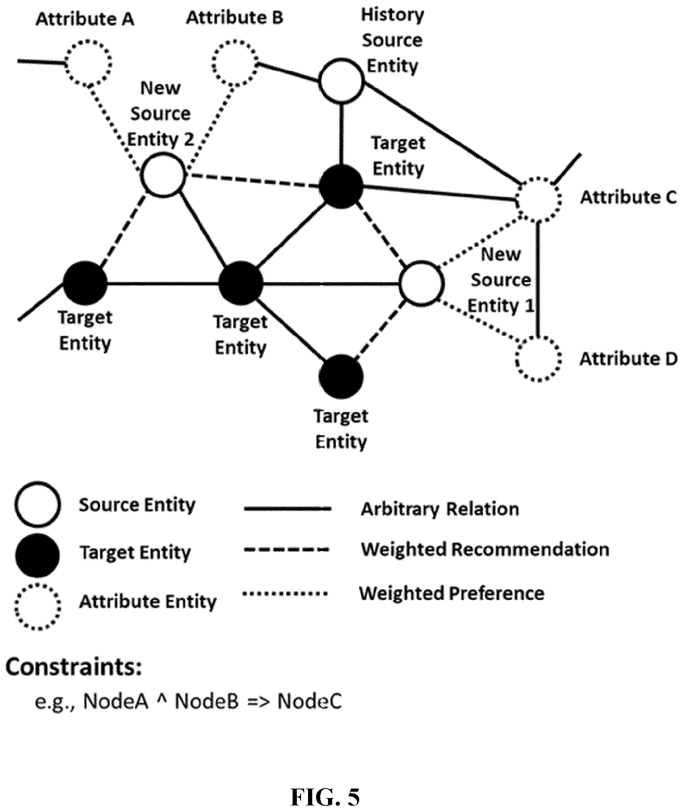

Once the prediction engine component has produced an output with an explanation (see FIG. 4 and FIG. 1, "Personalized Recommendations and Explanations"), this output is given to the preference collector component (input: FIG. 4 / FIG. 1, "Personalized Recommendations and Explanations", output: FIG. 5). This step adds, for each new source entity of interest, possible constraints (e.g., a certain entity or a relation that should or should not be used), personal weights and opinion weights (the weights being between 0 and 1). This can either be done by a person if, e.g., the source entity is a particular person and they would like to update constraints, personal preference or opinions. Alternatively, this can be done by an automated process, which automatically assigns constraints, personal preferences and opinions for the source entities and their predictions. For example, these might include the personal interest of the source entities (e.g., destination A might be the preference of person A, but person A actually does not have a strong opinion for a certain destination), and weights for the opinion for the each source entity (e.g., parents have more decision power than their children).

Taking the information collected so far into account (e.g., graph fusion data, recommendation data, preference data (see FIG. 5)), the consolidation engine component (input: FIG. 5, output: FIG. 2, "Consolidated Recommendation") computes and outputs a consolidated and ordered list of one or multiple recommendations, preferably including explanations for the group (e.g., the source entities). For the edges of the input graph, it is provided to distinguish between weighted recommendation, weighted preference and arbitrary relation. A recommendation edge connects a source node with a target node and is the result from the prediction engine component. This edge type also reflects the initial ranking order. Having this graph allows to feed it to a machine learning model (e.g., a neural network, a perceptron, a support vector machine (SVM), etc.) which can handle and exploit the specific groups of the graph explicitly. This is advantageous as they cover different information (e.g., weighted vs. non-weighted edge). The consolidation engine can be NSP or a modified version of KBlrn in which predictions are consolidated and re-ranked.

In addition, constraints (e.g., if the target destination is at the ocean, then it should not be winter) are fed to the model in the form of rules (any soft or hard constraints, e.g., of the source entities), and are passed along the graph as training data. These constraints are applied as a post-processing step to the output list from the machine learning model.

FIG. 3 illustrates exemplary the layers of the model. Taking the input, in the form of a graph, recommendation and preference data, the model computes a joint representation. Based on this, the model computes for a series of source queries and respective relations one joint target entity recommendation, for example, the query has the form (s₁,r,?t), ... ,(sₙ,r,?t). In particular, the model tries to find the entity that maximizes the joint probability of all source entities subject to the possible constraints. As used herein, the "joint probability" is a statistical measure that calculates the likelihood of two events occurring together at the same point in time. In contrast to a classical link prediction task, the model predicts a single node for a given set of triples with one unknown value. Ultimately, the model returns a ranked list of one or more recommendations for the set of source entities. The constraints can then be applied to this ranking to create a filtered ranking that is returned as the result. There can also be an explainable AI (XAI) engine, which can explain the prediction of the consolidation engine.

The output of the consolidation engine component is passed to the next third party system to process the consolidated recommendations and related explanations for the entities of interest (e.g., the source entities).

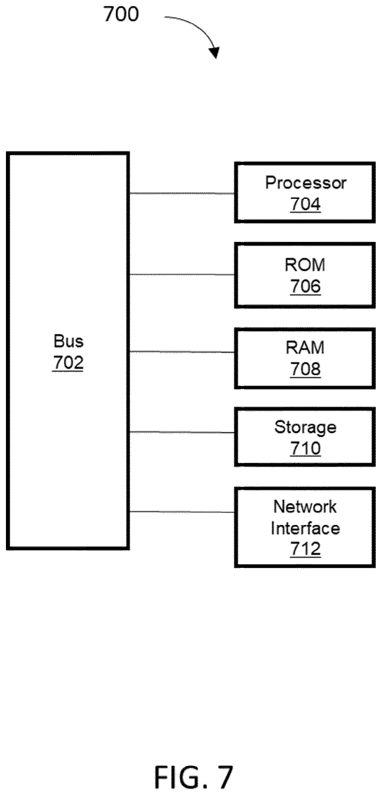

FIG. 7 is a block diagram of a processing system 700 according to an embodiment. The processing system 700 can be used to implement the protocols, devices, mechanisms, systems and methods described above and herein. For example, each functional node or component or module or device may include a processing system 700, or two or multiple nodes or components or modules or devices may be implemented by a processing system 700. A processing system 700 may include a processor 704, such as a central processing unit (CPU) of a computing device or a distributed processor system. The processor 704 executes processor-executable instructions for performing the functions and methods described above. In embodiments, the processor executable instructions are locally stored or remotely stored and accessed from a non-transitory computer readable medium, such as storage 710, which may be a hard drive, cloud storage, flash drive, etc. Read Only Memory (ROM) 706 includes processor-executable instructions for initializing the processor 704, while the random-access memory (RAM) 708 is the main memory for loading and processing instructions executed by the processor 704. The network interface 712 may connect to a wired network or cellular network and to a local area network or wide area network, such as the Internet, and may be used to receive and/or transmit data, keys, or other information, etc. as described herein. In certain embodiments, multiple processors perform the functions of processor 704.

The present invention relates to improving the technical systems of a smart city for green resource control as follows:
- Use Case: The focus is on reducing the CO2 emissions. In a smart multi-residential building, warm water preparation should happen most efficiently (warm water should only be produced when it is necessary in order to save energy). The present invention allows to determine how often and when warm water needs to be produced, based on the individual needs of the residents.
- Data Source: People within a building (source entities) which need warm water are used. Information about the respective needs (target entities) are gathered by a sensor network or the individuals. Personal preferences are provided by the source entities, for example depending on working hours (attribute entities). Potential constraints might refer to the environmental conditions for the mobile cameras to operate (preference collector).
- Method: Application of the proposed method provides that the system takes all provided information and computes, based on all opinions and restrictions, the best possible time windows to produce warm water. If conditions change (e.g., people move in and out), the method can be re-run to re-compute the time windows.
- Output: An ordered list of recommendations when to produce warm water preferably along with an explanation why these time windows were selected are a result of the method.
- Physical Change (Technical Effect): The outcome of the system is used to directly adapt the settings of the water and heating system in a smart building in an automated or semi-automated fashion.

Embodiments may provide the following advantages and improvements over existing technology:
1. Provision of a graph fusion module that combines three subgroups (source, target, and attribute entities) into a single knowledge graph representation to derive, first, individual recommendations (which may be rated) and, subsequently, a consolidated recommendation. This enables, given a new source entity, to update the prediction engine (such that only the vector of the new source entity are modified), to be able to predict for this source entity by learning about the source entity from its connection to attribute, target and other source entities (supplied from the graph fusion module) while holding on to the historic data.
2. Provision of a mechanism that, given the attribute and target entities associated with each source entity of interest and the personal recommendation (from the prediction engine component), links source entities with target entities, and a mechanism that assigns these triples a weight (for the recommendation and personal interests) that indicates the personal importance of the link.
3. Enabling to combine entities, their preferences and personal opinions with domain related knowledge, and personal recommendations into a unified representation to derive a consolidated recommendation for all entities.

An embodiment provides a method for providing a joint recommendation comprising:
1. Providing that the following information is set:
   a. Definitions of a set of source, target and attribute entities.
   b. For all source entities s₁, ..., sₙ, choose one relation r. Each (sᵢ, r0) where i=1,...n pair, can then be used to predict targets t1, ...., tm which are then consolidated into one prediction and represent what the group wants to achieve together.
   c. For each source entity, a series of one or more relevant attribute entities are linked (e.g., characteristics/preferences/interests). Source entities may also be linked to other source entities and target entities. It is also possible to define whether the opinion of a certain source entity has a higher weight or whether certain constraints need to be considered.
   d. For each target entity, a series of one or more relevant attribute entities are linked (e.g., characteristics). The target entities may also be linked to other target entities and source entities.
   e. A historical database, which describes a related situation (e.g., data about other source entities who were in the same or a similar situation), and general characteristics and descriptions about the domain.
2. For the initial start, the following steps may be executed in an embodiment:
   a. The prediction engine, and preferably a related XAI engine, are trained on the historical data.
   b. Subsequently, the consolidation engine is trained on the output of the prediction engine, the historical data, and the potential constraints, personal weights and the weighting of the individual opinions.
3. For applying the system, the following steps may be executed in an embodiment:
   a. The entities of interest (source entities) are provided with links to relevant attribute entities, other source entities and target entities. Similarly, target entities are provided with links to relevant attributes entities, other target entities and source entities. A new, previously unseen source entity is fused to the existing graph by connecting to attribute entities, and preferably also to source and target entities.
   b. Define for which set of source entities a joint prediction is to be found.
   c. The resulting graph is used as input to the prediction engine component to compute individual recommendations for each source entity.
   d. Each entity (or an automatic script based on rules) can weight the entries of their personal recommendations.
      i. To compute a consolidated prediction for a set of source entities, the recommendations and corresponding potential weights are fed to the consolidation engine component. All information may be unified into a single knowledge graph. In an embodiment, the constraints are not included in the knowledge graph.
      ii. The knowledge graph is fed to the consolidation recommendation AI engine to compute the consolidated recommendation for all given source entities. The consolidation recommendation AI engine returns one consolidated prediction for the defined set of source entities (see Step 3.c.).
   e. Combine input from Step 3.c. and Step 3.d. in a unified representation to compute the final consolidated recommendation.

Existing recommender systems typically use matrix factorization where entities are modeled only as source (often called user) and target (often called item) entities. In this setup, preferences and other concepts cannot be taken directly into account. Faisal M. Almutairi, Nicholas D. Sidiropoulos, and Bo Yang, "XPL-CF: Explainable Embeddings for Feature-based Collaborative Filtering," In Proceedings of the 30th ACM International Conference on Information & Knowledge Management (CIKM '21), Association for Computing Machinery, New York, NY, USA, pp. 2847-2851 (2021), which is hereby incorporated by reference herein, use such a system and make it explainable. In this kind of system, no additional relations can be presented, nor can other entities be presented, such as the attribute entities. Further, explanations can only be other users and items. Therefore, such a system is technically less flexible, less expressive and provides less insights for users compared to the present embodiments. Additionally, an existing recommendation system such as this cannot explicitly model different relations between users, which also is less expressive. It is also not possible using the existing recommendation system to provide a recommendation for a group of users.

There are also other existing recommendation systems that do take other relations and entities into account and can only supply a recommendation for an individual (see, e.g., Lawrence, C., Sztyler, T., and Niepert, M., "Explaining Neural Matrix Factorization with Gradient Rollback," Proceedings of the AAAI Conference on Artificial Intelligence, 35(6), pp. 4987-4995 (2021), and Pezeshkpour, P., Tian, Y., and Singh, S., "Investigating Robustness and Interpretability of Link Prediction via Adversarial Modifications," Proceedings of the 2019 Conference of the North American Chapter of the Association for Computational Linguistics (NAACL), pp. 3336-3347 (2019), each of which is incorporated by reference herein). In contrast to embodiments herein, these recommendation systems cannot provide a joint prediction for a group of entities and consolidate the predictions into one suitable joint decision while considering individual preference strengths. These recommendation systems also do not explicitly model the graph as a set of three entity types. In addition, there is no mechanism to obtain preferences and take a preference weighting into account.

In contrast to these existing recommendation systems, embodiments herein advantageously provide the following technical improvements:
1. Enables to explicitly model the relationship between source entities, allowing to express how a group of source entities interconnects.
2. Enables to incorporate new source entities that were not seen during training and provide an explanation for the source entities' predictions. This is not possible in the previous approaches.
3. Enables to provide a consolidated recommendation for a group of entities. This is not directly possible with the previous approaches. The method and system according to embodiments herein are the first to produce such consolidated predictions, having both individual predictions and consolidated predictions alongside explanations as an output. Naive solutions would suffer from the drawbacks described above.

A recent survey by Tran, T., Felfernig, A. and Tintarev, N., "Humanized recommender systems: State-of-the-art and research issues," ACM Transactions on Interactive Intelligent Systems (TiiS), 11(2), pp. 1-41 (2021), which is hereby incorporated by reference herein, highlights that psychological factors such as personality, emotions and social connections can significantly affect the outcome of a decision process. Further, the survey describes that the problem of decision bias in group recommender systems is a common problem as, in most cases, users do not have a clear picture of their preferences in mind before starting a decision process.

Embodiments not falling under the scope of the invention are able to overcome these issues by providing a way to reflect personalities and emotions through attribute entities, where social connections are described by edges in a knowledge graph. In addition, by the system providing as a first step personal recommendations to each source entity, the decision bias problem is mitigated.

An embodiment not falling under the scope of the invention can be applied to any technical system where there are individual predictions for a series of entities that would like to arrive at one joint prediction, to boost existing technology, or to improve activities on ESG or material science. A user interface is provided for interacting with the system and providing the input data, and receiving and viewing the output data (e.g., recommendations and explanations).

It is particular advantageous that, according to an embodiment, not only is the consolidated recommendation shown, but also the individual predictions and an explanation. If only the consolidated recommendation would be provided, then a user would not understand why the recommendation was made, therefore lowering the user's trust by not being able to see how individual predictions are combined into a consolidated prediction.

In contrast to an approach in which source entities are represented as one entity, embodiments herein provide: (1) a better recommendation because source entities' preferences can be taken into account; and (2) a more efficient prediction system that can take advantage of the connection(s) between source entities, leading to an overall improved prediction. Embodiments herein also provide improvements by being able to adapt the prediction engine to a new source entity and by collecting weights for the individual connections to the source entities in order to adapt and take preferences into account and thereby return an improved prediction result.

While subject matter of the present disclosure has been illustrated and described in detail in the drawings and foregoing description, such illustration and description are to be considered illustrative or exemplary and not restrictive. Any statement made herein characterizing the invention is also to be considered illustrative or exemplary and not restrictive as the invention is defined by the claims. It will be understood that changes and modifications may be made, by those of ordinary skill in the art, within the scope of the invention.

## Claims

1. A computer-implemented method of consolidating recommendations based on a plurality of individual recommendations, the method being implemented in one or more processors (704) connected to a memory (708), the method comprising:
receiving a knowledge graph including a plurality of source entities, a plurality of target entities and a plurality of attribute entities, wherein each source entity is linked to one or more of the plurality of attribute entities, and each target entity is linked to one or more of the plurality of attribute entities;
determining, using a trained prediction learning model, a prediction for each source entity based on the knowledge graph, the trained prediction model having been trained using prediction training data including historical data, wherein the prediction for each source includes recommendation data identifying one or multiple target entities; and
determining, using a trained consolidation learning model, a consolidated prediction for the plurality of source entities based on the prediction for each source entity, the trained consolidation learning model having been trained using consolidation training data including the historical data and the recommendation data, wherein the consolidated prediction identifies a target entity that maximizes a joint probability of the plurality of source entities,
wherein the source entities are residents of a multi-residential building, wherein the target entities are warm water needs of the residents gathered by a sensor network, and wherein the attribute entities are personal preferences provided by the residents,
wherein the consolidated prediction for the plurality of source entities based on the prediction for each source entity includes an ordered list of recommendations when to produce warm water, and
wherein the ordered list of recommendations is used to adapt the settings of a water and heating system of the building.

2. The method according to claim 1, wherein one or more of the plurality of source entities are linked to one or more other source entities and/or one or more target entities.

3. The method according to claim 1 or 2, wherein the determining, using a trained prediction learning model, a prediction for each source entity includes learning vector representations of the knowledge graph.

4. The method according to any of claims 1 to 3, wherein the consolidated prediction identifies multiple target entities in a ranked order.

5. The method according to claim 4, further comprising applying source entity constraints of one or more of the plurality of source entities to the ranked order to create a filtered ranked order of the identified multiple target entities.

6. The method of any of claims 1 to 5, wherein the recommendation data for each prediction includes a prediction explanation, and the consolidated prediction includes a consolidated prediction explanation.

7. The method of any of claims 1 to 6, wherein the prediction for each source entity includes a weight, and wherein the determining a consolidated prediction is further based on the weights of the predictions for each source entity.

8. The method of any of claims 1 to 7, further comprising:
fusing a new source entity into the knowledge graph by linking the new source entity to one or more of the plurality of attribute entities to produce a fused knowledge graph,
updating the step of determining a prediction for each source entity and the new source entity using the fused knowledge graph, to learn a vector representation for the new source entity, and
updating the step of determining a consolidated prediction for the plurality of source entities and the new source entity.

9. The method of claim 8, wherein fusing the new source entity into the knowledge graph comprises establishing links between the new source entity and existing entities in the graph in the form of triples, and using the triples to update the trained prediction learning model, such that the vector of the new source entity is modified during the updates and other vectors are left untouched.

10. A system configured for consolidating recommendations based on a plurality of individual recommendations, the system comprising one or more processors (704) configured to execute the method according to one of the claims 1 to 9.

11. A computer-readable storage medium comprising instructions which, when executed by a computer, cause the computer to carry out the method of one of the claims 1 to 9.

## Patentansprüche

1. Computerimplementiertes Verfahren zum Konsolidieren von Empfehlungen auf der Grundlage einer Vielzahl einzelner Empfehlungen, wobei das Verfahren in einem oder mehreren Prozessoren (704) implementiert ist, die mit einem Speicher (708) verbunden sind, wobei das Verfahren umfasst:
Empfangen eines Wissensgraphen, der mehrere Quellentitäten, mehrere Zielentitäten und mehrere Attributentitäten umfasst, wobei jede Quellentität mit einer oder mehreren der mehreren Attributentitäten verknüpft ist und jede Zielentität mit einer oder mehreren der mehreren Attributentitäten verknüpft ist;
Bestimmen einer Vorhersage für jede Quellentität unter Verwendung eines trainierten Vorhersagelernmodells auf der Grundlage des Wissensgraphen, wobei das trainierte Vorhersagemodell unter Verwendung von Vorhersage-Trainingsdaten einschließlich historischer Daten trainiert wurde, wobei die Vorhersage für jede Quelle Empfehlungsdaten umfasst, die eine oder mehrere Zielentitäten identifizieren; und
Bestimmen einer konsolidierten Vorhersage für die mehreren Quellentitäten auf der Grundlage der Vorhersage für jede Quellentität unter Verwendung eines trainierten Konsolidierungslernmodells, wobei das trainierte Konsolidierungslernmodell unter Verwendung von Konsolidierungstrainingsdaten trainiert wurde, welche die historischen Daten und die Empfehlungsdaten umfassen, wobei die konsolidierte Vorhersage eine Zielentität identifiziert, die eine gemeinsame Wahrscheinlichkeit der mehreren Quellentitäten maximiert,
wobei die Quellentitäten Bewohner eines Mehrfamilienhauses sind, wobei die Zielentitäten Warmwasserbedürfnisse der Bewohner sind, die von einem Sensornetzwerk erfasst werden, und wobei die Attributentitäten persönliche Präferenzen sind, die von den Bewohnern bereitgestellt werden,
wobei die konsolidierte Vorhersage für die mehreren Quellentitäten auf der Grundlage der Vorhersage für jede Quellentität eine geordnete Liste von Empfehlungen enthält, wann Warmwasser zu produzieren ist, und
wobei die geordnete Liste von Empfehlungen verwendet wird, um die Einstellungen eines Wasser- und Heizungssystems des Gebäudes anzupassen.

2. Verfahren nach Anspruch 1, wobei eine oder mehrere der mehreren Quellentitäten mit einer oder mehreren anderen Quellentitäten und/oder einer oder mehreren Zielentitäten verknüpft sind.

3. Verfahren nach Anspruch 1 oder 2, wobei das Bestimmen einer Vorhersage für jede Quellentität unter Verwendung eines trainierten Vorhersagelernmodells das Lernen von Vektordarstellungen des Wissensgraphen umfasst.

4. Verfahren nach einem der Ansprüche 1 bis 3, wobei die konsolidierte Vorhersage mehrere Zielentitäten in einer Rangfolge identifiziert.

5. Verfahren nach Anspruch 4, das ferner das Anwenden von Quellentitätsbeschränkungen einer oder mehrerer der mehreren Quellentitäten auf die Rangfolge umfasst, um eine gefilterte Rangfolge der identifizierten mehreren Zielentitäten zu erstellen.

6. Verfahren nach einem der Ansprüche 1 bis 5, wobei die Empfehlungsdaten für jede Vorhersage eine Vorhersageerklärung umfassen und die konsolidierte Vorhersage eine konsolidierte Vorhersageerklärung umfasst.

7. Verfahren nach einem der Ansprüche 1 bis 6, wobei die Vorhersage für jede Quellentität eine Gewichtung umfasst und wobei das Bestimmen einer konsolidierten Vorhersage ferner auf den Gewichtungen der Vorhersagen für jede Quellentität basiert.

8. Verfahren nach einem der Ansprüche 1 bis 7, das ferner umfasst:
Fusionieren einer neuen Quellentität in den Wissensgraphen durch Verknüpfen der neuen Quellentität mit einer oder mehreren der mehreren Attributentitäten, um einen fusionierten Wissensgraphen zu erzeugen,
Aktualisieren des Schritts des Bestimmens einer Vorhersage für jede Quellentität und die neue Quellentität unter Verwendung des fusionierten Wissensgraphen, um eine Vektordarstellung für die neue Quellentität zu lernen, und
Aktualisieren des Schritts des Bestimmens einer konsolidierten Vorhersage für die mehreren Quellentitäten und die neue Quellentität.

9. Verfahren nach Anspruch 8, wobei das Fusionieren der neuen Quellentität in den Wissensgraphen das Herstellen von Verknüpfungen zwischen der neuen Quellentität und bestehenden Entitäten in dem Graphen in Form von Tripeln und das Verwenden der Tripel zum Aktualisieren des trainierten Vorhersage-Lernmodells umfasst, so dass der Vektor der neuen Quellentität während der Aktualisierungen modifiziert wird und andere Vektoren unverändert bleiben.

10. System, das zum Konsolidieren von Empfehlungen auf der Grundlage einer Vielzahl von individuellen Empfehlungen konfiguriert ist, wobei das System einen oder mehrere Prozessoren (704) umfasst, die zum Ausführen des Verfahrens gemäß einem der Ansprüche 1 bis 9 konfiguriert sind.

11. Computerlesbares Speichermedium, das Anweisungen umfasst, die, wenn sie von einem Computer ausgeführt werden, den Computer veranlassen, das Verfahren gemäß einem der Ansprüche 1 bis 9 auszuführen.

## Revendications

1. Procédé de consolidation de recommandations mis en œuvre par ordinateur sur la base d'une pluralité de recommandations individuelles, le procédé étant mis en œuvre dans un ou plusieurs processeurs (704) connectés à une mémoire (708), le procédé comportant :
la réception d'un graphique de connaissances incluant une pluralité d'entités source, une pluralité d'entités cibles et une pluralité d'entités d'attribut, dans lequel chaque entité source est liée à une ou plusieurs de la pluralité d'entités d'attribut, et chaque entité cible est liée à une ou plusieurs de la pluralité d'entités d'attribut ;
la détermination, à l'aide d'un modèle d'apprentissage de prédiction entraîné, d'une prédiction pour chaque entité source sur la base du graphique de connaissances, le modèle de prédiction entraîné ayant été entraîné à l'aide de données d'entraînement de prédiction incluant des données historiques, dans lequel la prédiction pour chaque source inclut des données de recommandation identifiant une ou plusieurs entités cibles ; et
la détermination, à l'aide d'un modèle d'apprentissage de consolidation entraîné, d'une prédiction consolidée pour la pluralité d'entités sources sur la base de la prédiction pour chaque entité source, le modèle d'apprentissage de consolidation entraîné ayant été entraîné à l'aide de données d'entraînement de consolidation incluant les données historiques et les données de recommandation, dans lequel la prédiction consolidée identifie une entité cible qui maximise une probabilité commune de la pluralité d'entités sources,
dans lequel les entités sources sont des résidents d'un bâtiment multirésidentiel, dans lequel les entités cibles sont des besoins en eau chaude des résidents collectés par un réseau de capteurs, et dans lequel les entités d'attribut sont des préférences personnelles fournies par les résidents,
dans lequel la prédiction consolidée pour la pluralité d'entités sources sur la base de la prédiction pour chaque entité source inclut une liste ordonnée de recommandations pour produire de l'eau chaude, et
dans lequel la liste ordonnée de recommandations est utilisée pour adapter les réglages d'un système d'eau et de chauffage du bâtiment.

2. Procédé selon la revendication 1, dans lequel une ou plusieurs de la pluralité d'entités sources sont liées à une ou plusieurs autres entités sources et/ou une ou plusieurs entités cibles.

3. Procédé selon la revendication 1 ou 2, dans lequel la détermination, à l'aide d'un modèle d'apprentissage de prédiction entraîné, d'une prédiction pour chaque entité source inclut l'apprentissage de représentations vectorielles du graphique de connaissances.

4. Procédé selon l'une quelconque des revendications 1 à 3, dans lequel la prédiction consolidée identifie plusieurs entités cibles dans un ordre classé.

5. Procédé selon la revendication 4, comportant en outre l'application de contraintes d'entité source d'une ou plusieurs de la pluralité d'entités source à l'ordre classé pour créer un ordre classé filtré des multiples entités cibles identifiées.

6. Procédé selon l'une quelconque des revendications 1 à 5, dans lequel les données de recommandation pour chaque prédiction incluent une explication de prédiction, et la prédiction consolidée inclut une explication de prédiction consolidée.

7. Procédé selon l'une quelconque des revendications 1 à 6, dans lequel la prédiction pour chaque entité source inclut un poids, et dans lequel la détermination d'une prédiction consolidée est en outre basée sur les poids des prédictions pour chaque entité source.

8. Procédé selon l'une quelconque des revendications 1 à 7, comportant en outre :
la fusion d'une nouvelle entité source dans le graphique de connaissances en liant la nouvelle entité source à une ou plusieurs de la pluralité d'entités d'attribut pour produire un graphique de connaissances fusionné,
la mise à jour de l'étape de détermination d'une prédiction pour chaque entité source et la nouvelle entité source à l'aide du graphique de connaissances fusionnées, pour apprendre une représentation vectorielle pour la nouvelle entité source, et
la mise à jour de l'étape de détermination d'une prédiction consolidée pour la pluralité d'entités sources et la nouvelle entité source.

9. Procédé selon la revendication 8, dans lequel la fusion de la nouvelle entité source dans le graphique de connaissances comporte l'établissement de liens entre la nouvelle entité source et des entités existantes dans le graphique sous forme de triplets, et l'utilisation des triplets pour mettre à jour le modèle d'apprentissage de prédiction entraîné, de sorte que le vecteur de la nouvelle entité source soit modifié pendant les mises à jour et que d'autres vecteurs soient laissés intacts.

10. Système configuré pour consolider des recommandations sur la base d'une pluralité de recommandations individuelles, le système comportant un ou plusieurs processeurs (704) configurés pour exécuter le procédé selon l'une des revendications 1 à 9.

11. Support de stockage lisible par ordinateur comportant des instructions qui, lorsqu'elles sont exécutées par un ordinateur, amènent l'ordinateur à réaliser le procédé selon l'une des revendications 1 à 9.
